# EUROPÄISCHE PATENTSCHRIFT

(11) **EP 4 045 937 B1**
(45) Veröffentlichungstag und Bekanntmachung des Hinweises auf die Patenterteilung: **27.08.2025**
(21) Anmeldenummer: 21717442.4
(22) Anmeldetag: 08.04.2021
(51) Int. Cl.: G01S 7/481, G01S 17/10, G01S 17/42

(54) **VERFAHREN UND VORRICHTUNG ZUR ERFASSUNG VON BILDDATEN**
METHOD AND DEVICE FOR ACQUIRING IMAGE DATA
PROCÉDÉ ET DISPOSITIF D'ACQUISITION DE DONNÉES D'IMAGE

(30) Priorität: 09.04.2020 DE 102020110052
(43) Veröffentlichungstag der Anmeldung: 24.08.2022
(73) Patentinhaber: Hybrid Lidar Systems AG, 31162 Bad Salzdetfurth (DE)
(72) Erfinder: ELTAHER, Amr, 38126 Braunschweig (DE)
(74) Vertreter: Manitz Finsterwald Patent- und Rechtsanwaltspartnerschaft mbB
(86) Internationale Anmeldenummer: PCT/EP2021/059231
(87) Internationale Veröffentlichungsnummer: WO 2021/204968

(56) Entgegenhaltungen:
- DE-A1- 102017 222 970
- DE-A1- 102019 215 136
- US-A1- 2018 081 041
- US-A1- 2018 259 624

## Beschreibung

Die vorliegende Erfindung betrifft ein Verfahren und eine Vorrichtung zur Erfassung von Bilddaten nach dem Oberbegriff der unabhängigen Ansprüche (vgl. US 2018/0259624 A1 oder DE 10 2019 215 136 A1).

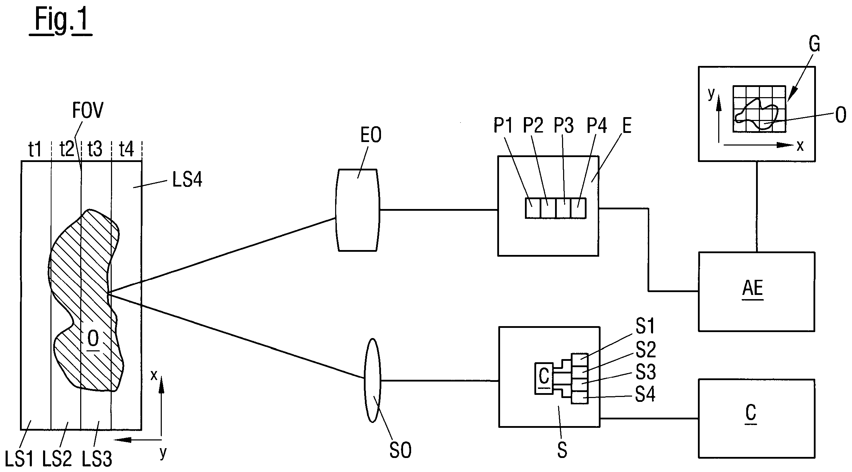

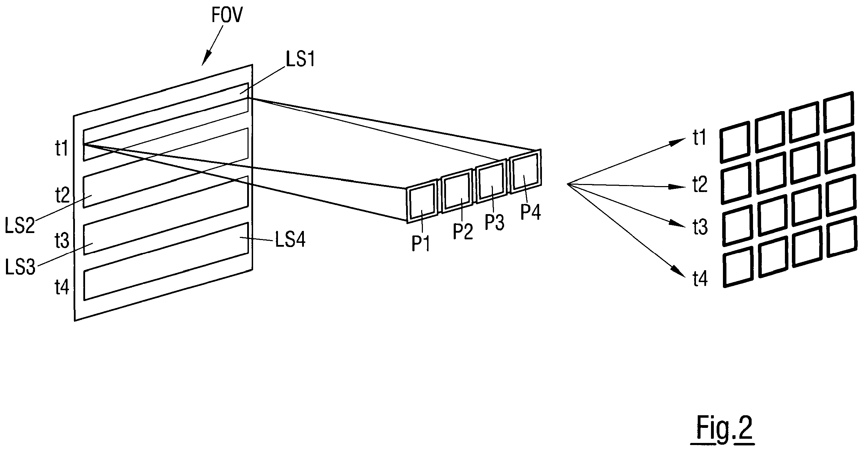

Derartige Verfahren und Vorrichtungen werden u.a. im Bereich des autonomen Fahrens in LIDAR-Systemen eingesetzt. Fig. 1 zeigt rein schematisch eine solche aus dem Stand der Technik bekannte Vorrichtung, umfassend eine Sendeeinheit S mit mehreren in zumindest einer Reihe angeordneten Sendeelementen S1 - S4, eine Empfangseinheit E mit in einer Reihe angeordneten Empfangspixeln P1 - P4, und zumindest eine zwischen der Sendeeinheit und der Empfangseinheit angeordnete Empfangsoptik EO. Hierbei kann ein einzelnes Sendeelement S1 einen Lichtimpuls bzw. Strahlungsimpuls aussenden, der in einem Sichtfeld FOV von einem Objekt O reflektiert wird und auf die Empfangspixel P1 - P4 gelangt. Obwohl die ausgesandte Strahlung üblicherweise im nicht sichtbaren Wellenlängenbereich liegt, werden im Folgenden zur vereinfachten Darstellung die Begriffe Licht und Strahlung synonym verwendet. Zur Messung der Entfernung wird die Laufzeit des Lichtimpulses ermittelt und aus einer Vielzahl von Messungen lässt sich aufgrund der unterschiedlichen Laufzeiten ein zusammengesetztes Gesamtbild G des Sichtfelds FOV erstellen. Bei diesem sogenannten Laufzeitverfahren (ToF) sind üblicherweise die Sendeelemente S1 - S4 in einer beispielsweise vertikalen Reihe untereinander angeordnet, wobei jedes Sendeelement von einer Steuereinheit C nacheinander impulsartig angesteuert wird. Durch eine Sendeoptik SO wird das Licht jedes Sendeelementes zu einem beispielsweise horizontal orientierten Lichtstreifen (vgl. Fig. 2) geformt, der in zeitlich aufeinander folgenden Zeitfenstern t1 - t4 das Sichtfeld FOV in Teilszenen LS1 - LS4 beleuchtet. Von einem in dem Sichtfeld FOV befindlichen Objekt O wird das Licht reflektiert und in Richtung der Empfangseinheit E zurückgestrahlt. In der Empfangseinheit E sind wie in Fig. 1 gezeigt mehrere Empfangspixel P1 - P4 in einer Reihe nebeneinander angeordnet, so dass das Licht jeder Teilszene von dem Objekt O reflektiert und als Lichtstreifen von den Empfangspixeln detektiert werden kann. Anschließend wird die Laufzeit des Lichts zwischen dem Aussenden des Impulses und dem Auftreffen auf den einzelnen Empfangspixeln von einer Auswerteeinrichtung AE ermittelt und aus der Laufzeit wird die Entfernung zum jeweiligen Reflexionspunkt berechnet. Indem anschließend weitere einzelne Sendeelemente nacheinander einen Lichtimpuls abgeben, werden nacheinander in den Zeitfenstern t2 - t4 weitere Teilszenen LS2 - LS4 beleuchtet. Deren Licht wird ebenfalls von dem Objekt O reflektiert und von den Empfangspixeln detektiert, so dass aus den berechneten Entfernungsdaten anschließend auf bekannte Weise ein zweidimensionales Bild G des Sichtfelds FOV und des darin befindlichen Objekts O zusammengesetzt werden kann.

Aus der DE 10 2017 222970 A1 ist ein LIDAR-Messsystem bekannt. Die US 2018/0081041 A1 offenbart ein LIDAR mit irregulärer Pulssequenz.

Es ist die Aufgabe der vorliegenden Erfindung, ein Verfahren und eine Vorrichtung zur Erfassung von Bilddaten zu schaffen, mit denen eine verbesserte Auflösung bei zumindest gleichbleibender Baugröße erreichbar ist.

Die Lösung dieser Aufgabe erfolgt nach einem ersten Aspekt der vorliegenden Erfindung durch ein Verfahren zur Erfassung von Bilddaten, das die folgenden Schritte umfasst: Vorsehen einer Sendeeinheit mit mehreren in zumindest einer Reihe angeordneten Sendeelementen, einer Empfangseinheit mit in Zeilen und Spalten angeordneten Empfangspixeln, und zumindest einer zwischen der Sendeeinheit und der Empfangseinheit angeordneten Empfangsoptik; Beleuchten einer ersten Teilszene eines Sichtfelds mit einem ersten Sendeelement während eines ersten Zeitfensters; Beleuchten einer weiteren Teilszene des Sichtfelds mit einem anderen Sendeelement während eines weiteren Zeitfensters; wobei von der Empfangsoptik während jedes Zeitfensters das von einem Objekt in der jeweiligen Teilszene reflektierte Licht gleichzeitig auf alle Empfangspixel projiziert wird, wobei die in den Zeitfenstern zeitlich nacheinander von den Empfangspixeln empfangenen Bilddaten ausgelesen und zu einem Gesamtbild zusammengesetzt werden und wobei im Strahlengang zwischen dem Sichtfeld und der Empfangseinheit keine bewegten Teile verwendet werden.

Durch diese Verfahrensweise wird erreicht, dass bei Beleuchtung jeder Teilszene durch ein Sendeelement mit nur einem Lichtimpuls durch die spezielle Ausgestaltung der Empfangsoptik alle Empfangspixel gleichzeitig beleuchtet werden, so dass nicht nur eine Reihe oder Spalte von Empfangspixeln sondern alle Empfangspixel der Empfangseinheit gleichzeitig beleuchtet werden. Durch zeitlich aufeinanderfolgendes Beleuchten der Teilszenen des Sichtfelds können die in den aufeinanderfolgenden Zeitfenstern zeitlich nacheinander von den Empfangspixeln empfangenen Bilddaten nacheinander ausgelesen und zu einem Gesamtbild zusammengesetzt werden. Hierzu wird von der Empfangsoptik während jedes einzelnen Zeitfensters das von einem in dem Sichtfeld befindlichen Objekt reflektierte Licht der jeweiligen Teilszene innerhalb des Zeitfensters gleichzeitig auf alle Empfangspixel der Empfangseinheit projiziert. Hierdurch kann die Auflösung erhöht werden, ohne dass im Strahlengang zwischen dem Sichtfeld und der Empfangseinheit bewegte Teile wie Drehspiegel oder dergleichen verwendet werden müssen, wodurch geringe Herstellungskosten und eine erhöhte Zuverlässigkeit erreicht werden.

Vorteilhafte Ausführungsformen der Erfindung sind in der Beschreibung, der Zeichnung sowie den Unteransprüchen beschrieben.

Nach einer ersten vorteilhaften Ausführungsform kann durch die Empfangsoptik zur Erhöhung der Auflösung das reflektierte Licht aller Teilszenen überlagert und auf einen einzigen Abbildungsbereich projiziert werden, in dem sich alle Empfangspixel befinden. Dies ermöglicht den Einsatz einer Vielzahl von Empfangspixeln, deren Gesamtheit zur Auswertung des reflektierten Lichts jeder Teilszene verwendet wird.

Nach einer weiteren vorteilhaften Ausführungsform können durch die Empfangsoptik zumindest zwei nebeneinander angeordnete Teilbereiche einer Teilszene so auf die Empfangspixel der Empfangseinheit projiziert werden, dass diese dort untereinander und/oder beabstandet angeordnet sind. Hierdurch besteht die Möglichkeit, mit Hilfe der Empfangsoptik die Auflösung des Gesamtbilds des Sichtfelds in x-Richtung und in y-Richtung zu variieren. In ähnlicher Weise kann die Empfangsoptik so ausgebildet werden, dass zumindest zwei untereinander angeordnete Teilbereiche einer Teilszene so auf die Empfangspixel der Empfangseinheit projiziert werden, dass diese dort nebeneinander und/oder beabstandet angeordnet sind.

Mit anderen Worten kann die Empfangsoptik eine gewünschte Zuordnung (mapping) vornehmen, um in bestimmten Bereichen des zusammengesetzten Gesamtbildes eine unterschiedliche Auflösung zu bewirken. Durch eine unterschiedliche Ausgestaltung der Empfangsoptik kann somit bei gleicher Dimension der Sende- und Empfangspixel eine Anpassung der Auflösung erfolgen. Hierdurch lässt sich das zusammengesetzte Gesamtbild nach einer weiteren vorteilhaften Ausführungsform aufgrund der Empfangsoptik beispielsweise so gestalten, dass dieses an seinen beiden Seitenrändern eine erhöhte Auflösung in y-Richtung aufweist.

Die Empfangsoptik kann mehrere Einzellinsen umfassen, aber insbesondere auch aus einem einzigen Bauteil bestehen. Die Empfangsoptik kann eine Anordnung fokussierender Elemente aufweisen und beispielsweise als Facettenlinse oder Mikrolinsenarray ausgestaltet sein, wobei die Anordnung nicht zwingend einem regulären Gitter folgen muss. Neben transmittiven Optiken können auch reflektive Optiken, z.B. Facettenspiegel, zur Anwendung kommen. Weiterhin kann die Empfangsoptik weitere optische Komponenten aufweisen, z.B. Feldlinsen oder Fokussierungselemente.

Nach einer weiteren vorteilhaften Ausführungsform können benachbarte Teilszenen nacheinander beleuchtet werden, was das nachfolgende Zusammensetzen des Gesamtbilds erleichtert.

Nach einer weiteren vorteilhaften Ausführungsform kann die Zahl der beleuchteten Teilszenen mit der Zahl der Sendeelemente übereinstimmen. In diesem Fall wird jeweils eine Teilszene während eines Zeitfensters von einem Sendeelement beleuchtet. Allerdings kann es hierbei vorkommen, dass bei einer zeitlich aufeinanderfolgenden Beleuchtung von benachbarten Teilszenen ein sogenanntes Überleuchten stattfindet, d.h. das in eine Teilszene des Sichtfelds abgestrahlte Licht beleuchtet (ungewollt) auch einen Teil einer benachbarten Teilszene, was zu Ungenauigkeiten bei der Bilddatenerfassung führen kann.

Um ein solches Überleuchten zu verhindern, kann nach einer weiteren vorteilhaften Ausführungsform die Zahl der Sendeelemente größer und insbesondere doppelt so groß sein wie die Zahl der beleuchteten Teilszenen. Bei dieser Ausführungsform kann eine einzelne Teilszene zunächst von einem ersten Sendeelement und in einem anschließenden Zeitfenster von einem zweiten Sendeelement beleuchtet werden, wobei die Beleuchtung so erfolgen kann, dass in jedem Zeitfenster jeweils nur ein Teilbereich der gleichen Teilszene beleuchtet wird. Entsprechend kann in jedem Zeitfenster nur ein vorbestimmter Teil der Empfangspixel ausgelesen werden, so dass ein Überleuchten der nicht ausgelesenen Empfangspixel unschädlich ist. So können beispielsweise während zwei aufeinanderfolgender Zeitfenster zwei übereinanderliegende Teilbereiche einer Teilszene nacheinander beleuchtet werden, wobei in jedem Zeitfenster entweder nur die obere oder nur die untere Hälfte der Empfangspixel ausgelesen wird. Hierdurch wird in einem ersten Zeitfenster ein erster zusammenhängender Bereich der Empfangspixel und in dem nachfolgenden Zeitfenster ein anderer zusammenhängender Bereich der Empfangspixel ausgelesen, der zu dem ersten Bereich benachbart ist. Bei diesem Verfahren wird zwar eine größere Menge an Sendeelementen benötigt, bei dem beschriebenen Ausführungsbeispiel die doppelte Menge, und es wird die doppelte Anzahl an Zeitfenstern benötigt, jedoch kann wirksam verhindert werden, dass überleuchtete Teilbereiche auf die Empfangspixel gelangen, was ansonsten zu einer verfälschten Bilddarstellung führen würde.

Eine weitere Möglichkeit, eine Auswertung von unerwünscht beleuchteten Teilbereichen zu verhindern, ist nach einer weiteren Ausführungsform die Möglichkeit, in der Empfangsoptik oder im Strahlengang zwischen dem Sichtfeld und der Empfangsoptik zumindest eine Teilszene des Sichtfelds zu verdecken. Auf diese Weise kann ebenfalls verhindert werden, dass Licht von einem überleuchteten Teilbereich auf die Empfangseinrichtung gelangt.

Nach einer weiteren vorteilhaften Ausführungsform kann eine solche Abdeckung dadurch realisiert werden, dass während jedes Zeitfensters nur das reflektierte Licht eines vorbestimmten Bereichs einer beleuchteten Teilszene auf die Empfangspixel gerichtet wird. So kann die Empfangsoptik beispielsweise mit mechanischen oder elektronischen Mitteln so maskiert werden, dass immer nur ein vorbestimmter Ausschnitt der reflektierten Strahlung, beispielsweise ein einer Teilszene entsprechender Ausschnitt freigegeben wird. Dies kann beispielsweise mit einer rollierenden Blende realisiert werden, die - beispielsweise mit Hilfe der LCD-Technik - nur ein vorbestimmtes transparentes Fenster vorsieht, das Licht in Richtung der Empfangseinheit durchlässt, und das synchron zur Ansteuerung der Sendeelemente bewegt wird, so dass jeweils nur Licht aus der beleuchteten Teilszene auf die Empfangspixel gelangt.

Nach einem weiteren Aspekt der vorliegenden Erfindung betrifft diese eine Vorrichtung, insbesondere zur Durchführung eines Verfahrens der vorstehend beschriebenen Art, umfassend eine Sendeeinheit mit mehreren in zumindest einer Reihe angeordneten Sendeelementen, eine Empfangseinheit mit in Zeilen und Spalten angeordneten Empfangspixeln und zumindest eine zwischen der Sendeeinheit und der Empfangseinheit angeordnete Empfangsoptik, die mehrere Teilszenen des von einem Objekt in einem Sichtfeld reflektierten Lichts erfasst und zu einem einzigen Abbildungsbereich überlagert. Hierbei kann die Empfangsoptik den Abbildungsbereich gleichzeitig auf alle Empfangspixel projizieren, so dass bei Beleuchtung nur einer Teilszene dennoch sämtliche Empfangspixel der Empfangseinheit beleuchtet werden, wodurch die Auflösung erhöht ist. Eine Auswerteeinrichtung kann auf an sich bekannte Art und Weise die zeitlich nacheinander von der Empfangseinheit empfangenen Bilddaten aller Teilszenen zu einem Gesamtbild zusammensetzen, wobei die Empfangsoptik insbesondere so ausgebildet sein kann, dass das zusammengesetzte Gesamtbild in verschiedenen Richtungen eine unterschiedliche Auflösung aufweist. So kann die Empfangsoptik beispielsweise so ausgebildet sein, dass das zusammengesetzte Gesamtbild an seinen beiden Seitenrändern eine erhöhte Auflösung in vertikaler Richtung aufweist.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine schematische Darstellung einer Anordnung nach dem Stand der Technik;
- Fig. 2: die Erfassung von Bilddaten mit der Anordnung von Fig. 1;
- Fig.3: einen Teil einer Vorrichtung zwischen Sichtfeld und Empfangseinrichtung zur Erfassung von Bilddaten;
- Fig. 4: einen Strahlengang einer weiteren Vorrichtung zur Erfassung von Bilddaten zwischen Sichtfeld und Empfangseinrichtung;
- Fig. 5: einen Strahlengang einer weiteren Vorrichtung zur Erfassung von Bilddaten zwischen Sichtfeld und Empfangseinrichtung;
- Fig. 6: eine Darstellung, die den Effekt des Überleuchtens einzelner Teilszenen illustriert;
- Fig. 7: eine Darstellung zur Erfassung von Bilddaten eines ersten Teilbereichs einer Teilszene in einem ersten Zeitfenster;
- Fig. 8: eine Darstellung zur Erfassung von Bilddaten eines zweiten Teilbereichs der Teilszene in einem zweiten Zeitfenster; und
- Fig. 9: eine Anordnung zur Erfassung von Bilddaten mit Abdeckeinrichtung.

Fig. 1 zeigt eine Darstellung einer Vorrichtung zur Erfassung von Bilddaten nach dem Stand der Technik, bei der in zeitlich aufeinanderfolgenden Zeitfenstern t1 bis t4 von jeweils einem Sendeelement S1 - S4, beispielsweise einer Laserdiode, örtlich benachbarte Teilszenen LS1 bis LS4 in einem Sichtfeld FOV beleuchtet werden, in dem sich zumindest ein Objekt O befindet. Die Beleuchtung der Teilszenen erfolgt beispielsweise in Form von benachbarten horizontalen Lichtstreifen, die durch eine Sendeoptik SO erzeugt werden. Die einzelnen Sendeelemente S1 - S4 werden von einer Steuerung C zeitlich nacheinander blitzartig angesteuert, so dass auf dem Objekt O jeweils ein Lichtstreifen während eines Zeitfensters beleuchtet wird.

Wie Fig. 2 verdeutlicht, wird das im Zeitfenster t1 von dem Objekt O reflektierte Licht auf eine Reihe von Empfangspixeln P1 bis P4 zurückreflektiert und die Laufzeit zwischen der Abgabe des Lichtimpulses und dem Auftreffen des Lichtimpulses auf den Empfangspixeln P1 bis P4 wird mit Hilfe einer Auswerteeinrichtung AE ermittelt, um hieraus den Abstand zwischen jedem Empfangspixel und dem Objekt O berechnen zu können. Im nächsten Zeitfenster t2 beleuchtet ein anderes (benachbartes) Sendeelement S2 eine benachbarte Teilszene LS2 und damit einen zu der Teilszene LS1 benachbarten Bereich des Objektes O. Durch die Empfangsoptik EO wird danach das von dem Objekt reflektierte Licht der Teilszene LS2 und anschließend auch der folgenden Teilszenen LS3 und LS4 wiederum auf die Empfangspixel P1 bis P4 projiziert, so dass zu den Zeitfenstern t1 bis t4 für jedes Empfangspixel eine Laufzeit ermittelt werden kann. Durch die Auswerteeinrichtung AE werden anschließend die einzelnen Laufzeiten in Entfernungen umgerechnet und aus den einzelnen Entfernungswerten kann dann auf bekannte Weise ein zweidimensionales zusammengesetztes Bild G mit (bei dem dargestellten Ausführungsbeispiel) sechzehn in einer Matrix angeordneten Bildpunkten erstellt bzw. errechnet werden.

Es versteht sich, dass bei dem obigen Beispiel und auch bei den nachfolgend beschriebenen Ausführungsformen die Anzahl aller Sendeelemente und aller Empfangspixel in allen Reihen, Zeilen oder Spalten nur beispielhaft ist.

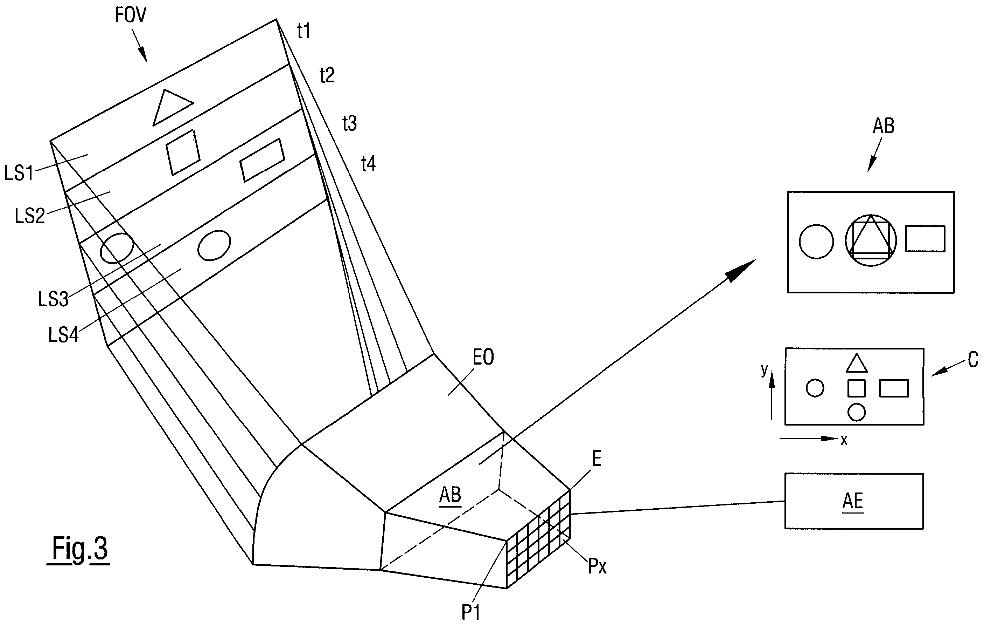

Fig. 3 zeigt eine schematische Darstellung einer erfindungsgemäßen Vorrichtung zur Erfassung von Bilddaten nach der Erfindung. Hierbei erfolgt die Beleuchtung der einzelnen Teilszenen LS1 bis LS4 auf die gleiche Weise wie bei der Anordnung von Fig. 1. Erfindungsgemäß ist also auch eine Sendeeinheit S mit mehreren in zumindest einer Reihe angeordneten Sendeelementen S1 - S4 (z.B.

Laserdioden) vorgesehen, wobei der Lichtimpuls jedes Sendeelementes von der Sendeoptik SO zu einem Lichtstreifen umgeformt wird, der in zeitlich aufeinanderfolgenden Zeitfenstern t1 - t4 ein Sichtfeld FOV in räumlich benachbarten Teilszenen LS1 bis LS4 beleuchtet. Von Objekten innerhalb des Sichtfelds FOV wird das Licht von Objekten in jeder Teilszene LS1 - LS4 reflektiert und von einer Empfangsoptik EO auf einen Abbildungsbereich AB abgebildet. Der Abbildungsbereich AB wird dann auf eine Empfangseinheit E projiziert, die in Zeilen und Spalten angeordnete Empfangspixel P1 - Px aufweist. Die Empfangseinheit E ist auf gleiche Weise wie bei der Vorrichtung von Fig. 1 mit einer Auswerteeinrichtung AE verbunden, die zeitlich nacheinander von der Empfangseinheit E empfangene Bilddaten zu einem Gesamtbild G zusammensetzt.

In Fig. 3 sind in den verschiedenen Teilszenen LS1 - LS4 verschiedene Objekte innerhalb des Sichtfelds FOV dargestellt, die lediglich zur vereinfachten Darstellung als geometrische Objekte in Form eines Dreiecks, eines Quadrats, eines Rechtecks und zweier Kreise dargestellt sind. Die Besonderheit der erfindungsgemäß verwendeten Empfangsoptik EO liegt nun darin, dass diese das von allen Objekten in allen Teilszenen reflektierte Licht gleichzeitig auf alle Empfangspixel P1 - Px der Empfangseinheit projiziert. Die Empfangsoptik EO "sieht" somit zu allen Zeitpunkten alle Teilszenen LS1 - LS4 des Sichtfelds FOV, überlagert jedoch das reflektierte Licht aller Teilszenen auf einen einzigen Abbildungsbereich AB, der dann auf sämtliche Empfangspixel P1 - Px der Empfangseinheit E projiziert wird. Dies führt dazu, dass sich die Bilder sämtlicher Teilszenen zu einem Abbildungsbereich AB überlagern, so dass alle geometrischen Objekte in den einzelnen Teilszenen in dem Abbildungsbereich AB überlagert sind, wie in der vergrößerten Darstellung in Fig. 3 rechts zu erkennen ist.

Zur Erfassung der Bilddaten mit der in Fig. 3 dargestellten Vorrichtung wird zunächst die erste Teilszene LS1 im Sichtfeld FOV mit dem ersten Sendeelement S1 während eines ersten Zeitfensters t1 beleuchtet, so dass das von dem dreieckigen Objekt in der Teilszene LS1 reflektierte Licht auf den Abbildungsbereich AB projiziert wird. Dieses Licht wird von der Empfangsoptik EO während des Zeitfensters t1 auf sämtliche Empfangspixel P1 - Px der Empfangseinheit E projiziert und die hierdurch erzeugten Bilddaten werden von der Auswerteeinrichtung AE ausgelesen. Anschließend wird nur die benachbarte Teilszene LS2 durch das zweite Sendeelement S2 während eines sich anschließenden Zeitfensters t2 beleuchtet und das von dem quadratischen Objekt in der Teilszene LS2 reflektierte Licht wird auf den Abbildungsbereich AB abgebildet und auf sämtliche Empfangspixel projiziert. Die einzelnen Teilszenen werden also zeitlich nacheinander und insbesondere blitzartig beleuchtet, wobei die Steuerung C der Sendeelemente so ausgebildet ist, dass diese die Sendeelemente in einer vorbestimmten Reihenfolge abwechselnd und nacheinander ansteuert. Die Auswerteeinrichtung AE kann dann die in den Zeitfenstern zeitlich nacheinander von den Empfangspixeln empfangenen Bilddaten auslesen und zu einem Gesamtbild G zusammensetzen.

Da bei dem beschriebenen Verfahren und der beschriebenen Vorrichtung erfindungsgemäß im Strahlengang zwischen dem Sichtfeld FOV und der Empfangseinheit E keine bewegten Teile verwendet werden, lässt sich eine hohe Präzision bei niedrigen Kosten erzielen.

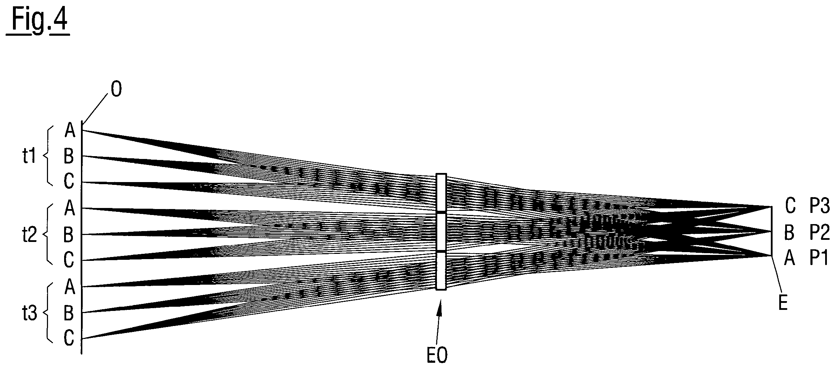

Fig. 4 zeigt eine weitere Ausführungsform, bei der die Empfangsoptik EO so ausgebildet ist, dass das in Zeitfenstern t1, t2 und t3 von einem Objekt O in einer Teilszene reflektierte Licht aus untereinander angeordneten Teilbereichen A, B, C gleichzeitig auf drei untereinander angeordnete Empfangspixel P3, P2 und P1 entsprechend den Teilbereichen C, B und A sowie auf mehrere (nicht dargestellte) nebeneinander angeordnete Empfangspixel projiziert wird. Hierdurch lässt sich die Auflösung der Vorrichtung zur Erfassung von Bilddaten weiter erhöhen.

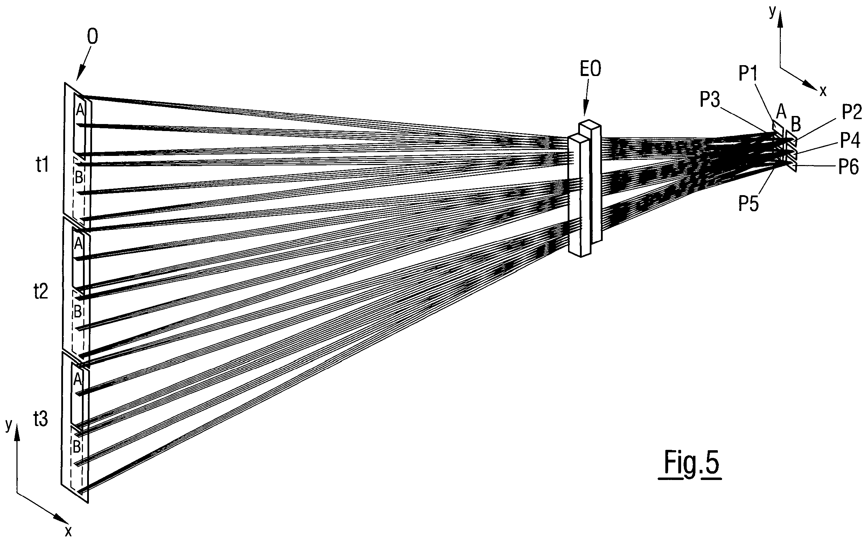

Fig. 5 zeigt eine weitere Ausführungsform, bei der die Sendeoptik SO so ausgebildet ist, dass ein in unterschiedlichen Zeitfenstern t1, t2 und t3 von jeweils einem Sendeelement auf das Objekt O projizierter vertikaler Lichtstreifen auf beispielhaft sechs Empfangspixel P1 - P6 abgebildet wird. Jeder Teilszene weist in jedem Zeitfenster t1 - t3 zwei übereinanderliegende Teilbereiche A und B auf.

Bei dieser Ausführungsform weist die Empfangseinheit E insgesamt sechs Empfangspixel P1 - P6 auf, die in drei Zeilen und zwei Spalten angeordnet sind. Hierbei befinden sich die Empfangspixel P1, P2 und P3 in einer Spalte und die Empfangspixel P2, P4 und P6 in einer weiteren, danebenliegenden Spalte.

Bei dieser Ausführungsform ist die Empfangsoptik EO so ausgebildet, dass jeder unter- bzw. übereinander liegende Teilbereich A und B einer Teilszene von einem Objekt O so auf die Empfangspixel projiziert wird, dass die reflektierte Strahlung des Teilbereichs A auf den Empfangspixeln P1, P3 und P5 auftrifft, wohingegen der Teilbereich B auf den Empfangspixeln P2, P4 und P6 abgebildet wird. Hierdurch werden die auf dem Objekt O über- bzw. untereinander liegenden Teilbereiche A und B auf den Empfangspixeln der Empfangseinheit so abgebildet, dass diese dort nebeneinander liegen und auf beispielhaft drei Empfangspixel projiziert werden. Hierdurch ist die Auflösung des zusammengesetzten Gesamtbildes in y-Richtung verglichen zur x-Richtung erhöht.

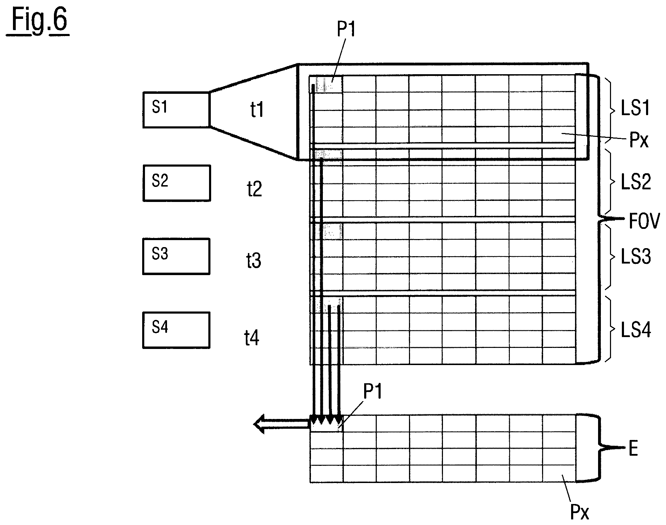

Unter Bezugnahme auf Fig. 6 wird nachfolgend die Problematik des Überleuchtens einzelner Teilszenen beschrieben.

Wie vorstehend erläutert wurde, werden bei dem erfindungsgemäßen Verfahren nacheinander einzelne Teilszenen eines Sichtfelds insbesondere streifenartig beleuchtet und das von der beleuchtete Teilszene reflektierte Licht wird über die Empfangsoptik auf sämtliche Empfangspixel projiziert. Da zwar das gesamte Sichtfeld gleichzeitig auf alle Empfangspixel projiziert wird, jedoch immer nur eine Teilszene beleuchtet wird, registriert die Empfangseinheit in aufeinanderfolgenden Zeitfenstern normalerweise immer nur das von einer Teilszene reflektierte Licht.

So ist beispielsweise in Fig. 6 dargestellt, dass lediglich das Sendeelement S1 die Teilszene LS1 beleuchtet, wobei das Licht der gesamten Teilszene LS1 mit Hilfe der Empfangsoptik EO auf die Empfangseinheit E mit allen Pixeln P1 - Px projiziert wird. Wie in Fig. 6 angedeutet, ist es in der Praxis jedoch nicht immer möglich, jede Teilszene exakt bis zur angrenzenden Teilszene zu beleuchten, die innerhalb des aktuellen Zeitfensters eigentlich nicht beleuchtet werden soll. Insofern kann es zu dem vorstehend genannten Überleuchten kommen, bei dem das für die Teilszene LS1 gedachte Licht in die benachbarte Teilszene LS2 hineinstrahlt. Dies führt jedoch dazu, dass die Empfangspixel in der obersten Zeile der Empfangseinheit E in der ersten Teilszene LS1 (vollständig) beleuchtet werden, jedoch auch in der benachbarten Teilszene LS2 (teilweise) Licht empfangen. Da jedoch mit der erfindungsgemäßen Empfangsoptik sämtliche Teilszenen stets auf den einzigen Abbildungsbereich AB überlagert werden, führt dies dazu, dass die Empfangspixel in der obersten Zeile der Empfangseinheit E Reflexionen empfangen, die nicht nur von der Teilszene LS1 sondern auch teilweise von der Teilszene LS2 stammen, was zu falschen Ergebnissen führen kann.

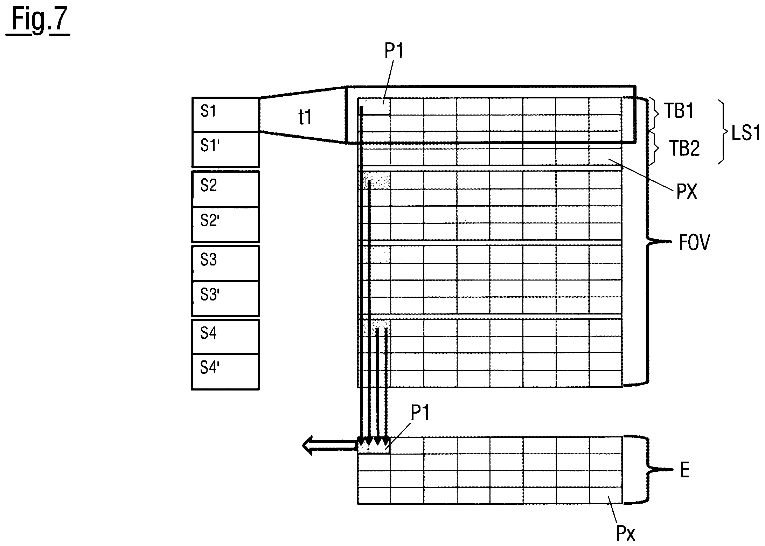

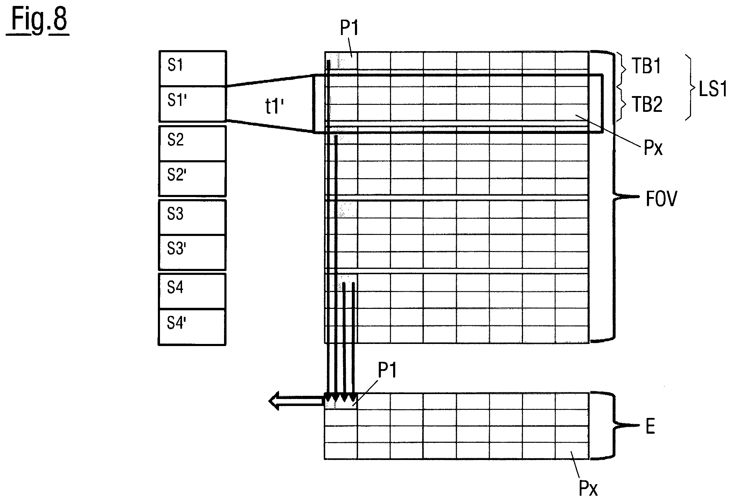

Eine Lösung für dieses Problem kann darin bestehen, jede Teilszene abwechselnd mit mehr als einem Sendeelement zu beleuchten, dabei jedoch innerhalb jedes Zeitfensters immer nur einen Teil der Empfangspixel auszulesen. So kann beispielsweise in einem ersten Zeitfenster ein erster zusammenhängender Bereich der Empfangspixel und in dem nachfolgenden Zeitfenster ein anderer zusammenhängender Bereich der Empfangspixel ausgelesen werden, der zu dem ersten Bereich benachbart ist und der die gleiche Teilszene beleuchtet. So sind bei der Anordnung von Fig. 7 für jede Teilszene zwei Sendeelemente S1 und S1' bis S4, S4' vorgesehen, wobei jeweils zwei der Sendeelemente zur Ausleuchtung verschiedener Teilbereiche TB1 und TB2 ein und derselben Teilszene LS1 vorgesehen sind. So beleuchtet beispielsweise das Sendeelement S1 den oberen Teilbereich TB1 der Teilszene LS1 (Fig. 7) im Zeitfenster t1 und das Sendeelement S1' den unteren Teilbereich TB2 der Teilszene LS1 im nachfolgenden Zeitfenster t1' (Fig. 8).

Um das Problem des Überleuchtens zu vermeiden, werden jedoch bei Aktivierung des Sendeelements S1 nur die in der oberen Hälfte, d.h. bei dem dargestellten Ausführungsbeispiel nur die in den beiden oberen Zeilen angeordneten Empfangspixel, ausgelesen. Dagegen bleiben die beiden unteren Zeilen der Empfangseinheit E zu diesem Zeitpunkt inaktiv. Umgekehrt werden die beiden oberen Zeilen der Empfangspixel inaktiv geschaltet, wenn die Teilszene LS1 mit dem Sendeelement S1' in ihrem unteren Teilbereich beleuchtet wird. Bei dieser Verfahrensweise wird zwar eine doppelte Anzahl an Sendeelementen benötigt und für jede Teilszene müssen zwei Beleuchtungssequenzen durchlaufen werden. Jedoch ist das Problem des Überblendens nicht mehr vorhanden.

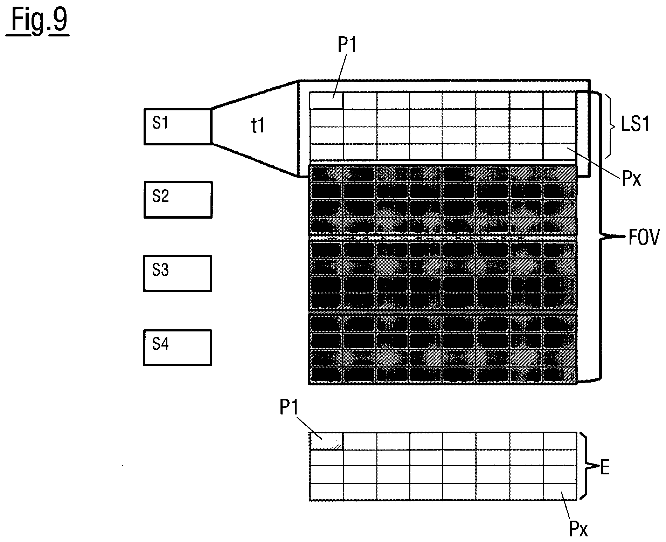

Eine weitere Lösung, um Fehlinformationen aufgrund von Überblendung zu vermeiden, ist im Zusammenhang mit Fig. 9 erläutert. Bei dieser Variante ist entweder im Bereich der Empfangsoptik EO, oder auch in die Empfangsoptik EO integriert, oder auch im Strahlengang zwischen dem Sichtfeld FOV und der Empfangsoptik EO eine Abdeckeinrichtung vorgesehen, mit der zumindest eine benachbarte Teilszene des Sichtfelds FOV verdeckt wird. Wie in Fig. 9 verdeutlicht, ist bei Beleuchtung der Teilszene LS1 mit dem Sendeelement S1 der Bereich aller benachbarten Teilszenen LS2 bis LS4 abgedeckt bzw. maskiert, so dass der Abbildungsbereich AB tatsächlich ausschließlich reflektierte Strahlung aus der ersten Teilszene LS1 erhält. Diese Maskierung kann beispielsweise durch eine mechanische oder auch durch eine elektronische Blende vorgesehen werden, d.h. durch ein transparentes Durchlassfenster, welches jeweils reflektierte Strahlung aus nur einer gewünschten Teilszene durchtreten lässt. So kann beispielsweise mit Hilfe einer LCD-Abschatteinrichtung ein rollierendes Fenster in die Empfangsoptik EO integriert werden, das mit der Steuerung C der Sendeelemente zeitlich synchronisiert ist, so dass jeweils nur reflektiertes Licht von der gerade beleuchteten Teilszene zu dem Abbildungsbereich AB durchgelassen wird.

Indem die Steuerung C die einzelnen Sendeelemente S1 - S4 in einer vorbestimmten Reihenfolge nacheinander ansteuert und die Auswerteeinrichtung AE die zeitlich nacheinander von der Empfangseinheit E empfangenen Bilddaten zu einem Gesamtbild G zusammensetzt, können hoch aufgelöste zweidimensionale Bilder erstellt werden, die eine Erstreckung in Richtung x (Bildbreite) und in Richtung y (Bildhöhe) mit unterschiedlicher Auflösung besitzen.

## Patentansprüche

1. Verfahren zur Erfassung von Bilddaten, umfassend die folgenden Schritte:
a) Vorsehen einer Sendeeinheit (S) mit mehreren in zumindest einer Reihe angeordneten Sendeelementen (S1 - S4), einer Empfangseinheit (E) mit in Zeilen und Spalten angeordneten Empfangspixeln (P1 - Px), und zumindest einer zwischen der Sendeeinheit (S) und der Empfangseinheit (E) angeordneten Empfangsoptik (EO);
b) Beleuchten einer ersten Teilszene (LS1 - LS4) eines Sichtfelds (FOV) mit einem ersten Sendeelement (S1 - S4) während eines ersten Zeitfensters (t1);
c) Beleuchten einer weiteren Teilszene (LS1 - LS4) des Sichtfelds (FOV) mit einem anderen Sendeelement (S1 - S4) während eines weiteren Zeitfensters (t2); wobei
d) die in den Zeitfenstern zeitlich nacheinander von den Empfangspixeln empfangenen Bilddaten ausgelesen und zu einem Gesamtbild (G) zusammengesetzt werden; und
e) im Strahlengang zwischen dem Sichtfeld (FOV) und der Empfangseinheit (E) keine bewegten Teile verwendet werden;
**dadurch gekennzeichnet, dass**
f) von der Empfangsoptik (EO) während jedes Zeitfensters (t1 - t4) das von einem Objekt in der jeweiligen Teilszene (LS1 - LS4) reflektierte Licht gleichzeitig auf alle Empfangspixel (P1 - Px) projiziert wird.

2. Verfahren nach Anspruch 1,
**dadurch gekennzeichnet, dass**
durch die Empfangsoptik (EO) zur Erhöhung der Auflösung das reflektierte Licht aller Teilszenen (LS1 - LS4) überlagert und auf einen einzigen Abbildungsbereich (AB) projiziert wird.

3. Verfahren nach Anspruch 1 oder 2,
**dadurch gekennzeichnet, dass**
durch die Empfangsoptik (EO) zumindest zwei nebeneinander angeordnete Teilbereiche (A, B) einer Teilszene (LS1 - LS4) so auf die Empfangspixel (P1 - Px) der Empfangseinheit (E) projiziert werden, dass diese dort untereinander und/oder beabstandet angeordnet sind.

4. Verfahren nach zumindest einem der vorstehenden Ansprüche,
**dadurch gekennzeichnet, dass**
durch die Empfangsoptik (EO) zumindest zwei untereinander angeordnete Teilbereiche (A, B) einer Teilszene (LS1 - LS4) so auf die Empfangspixel (P1 - Px) der Empfangseinheit (E) projiziert werden, dass diese dort nebeneinander und/oder beabstandet angeordnet sind.

5. Verfahren nach zumindest einem der vorstehenden Ansprüche,
**dadurch gekennzeichnet, dass**
durch die Empfangsoptik (EO) benachbarte Teilbereiche (A, B) einer Teilszene (LS1 - LS4) auf eine unterschiedliche Zahl von Empfangspixeln (P1 - Px) projiziert werden.

6. Verfahren nach zumindest einem der vorstehenden Ansprüche,
**dadurch gekennzeichnet, dass**
benachbarte Teilszenen (LS1 - LS4) nacheinander beleuchtet werden.

7. Verfahren nach zumindest einem der vorstehenden Ansprüche,
**dadurch gekennzeichnet, dass**
als Empfangsoptik (EO) eine insbesondere einstückige Facettenlinse verwendet wird.

8. Verfahren nach zumindest einem der vorstehenden Ansprüche,
**dadurch gekennzeichnet, dass**
die Zahl der beleuchteten Teilszenen (LS1 - LS4) mit der Zahl der Sendeelemente (S1 - S4) übereinstimmt.

9. Verfahren nach zumindest einem der vorstehenden Ansprüche 1 - 7,
**dadurch gekennzeichnet, dass**
die Zahl der Sendeelemente (S1 - S4, S1' - S4') größer und insbesondere doppelt so groß ist wie die Zahl der beleuchteten Teilszenen (LS1 - LS4).

10. Verfahren nach Anspruch 9,
**dadurch gekennzeichnet, dass**
verschiedene Teilbereiche (TB1, TB2) einer Teilszene (LS1) von einem ersten (S1 - S4) und einem zweiten Sendeelement (S1' - S4') während zweier aufeinanderfolgender Zeitfenster (t1, t1') nacheinander beleuchtet werden, wobei in jedem Zeitfenster immer nur ein Teil der Empfangspixel ausgelesen wird.

11. Verfahren nach Anspruch 10,
**dadurch gekennzeichnet, dass**
in einem ersten Zeitfenster (t1) ein erster zusammenhängender Bereich der Empfangspixel und in einem nachfolgenden Zeitfenster (t1') ein anderer zusammenhängender Bereich der Empfangspixel ausgelesen wird, der zu dem ersten Bereich benachbart ist.

12. Verfahren nach zumindest einem der vorstehenden Ansprüche,
**dadurch gekennzeichnet, dass**
in der Empfangsoptik (EO) oder im Strahlengang zwischen dem Sichtfeld (FOV) und der Empfangsoptik (EO) zumindest eine Teilszene (LS1 - LS4) des Sichtfelds (FOV) verdeckt wird.

13. Verfahren nach zumindest einem der vorstehenden Ansprüche,
**dadurch gekennzeichnet, dass**
während jedes Zeitfensters (t1 - t4) nur das reflektierte Licht eines vorbestimmten Teilbereichs (TB1, TB2) einer beleuchteten Teilszene auf die Empfangspixel gerichtet wird.

14. Vorrichtung, die zur Durchführung eines Verfahrens nach zumindest einem der vorstehenden Ansprüche ausgebildet ist, umfassend eine Sendeeinheit (S) mit mehreren in zumindest einer Reihe angeordneten Sendeelementen (S1 - S4; S1' - S4'), eine Empfangseinheit (E) mit in Zeilen und Spalten angeordneten Empfangspixeln (P1 - Px) und zumindest eine zwischen der Sendeeinheit (S) und der Empfangseinheit (E) angeordnete Empfangsoptik (EO), die mehrere Teilszenen des von einem Objekt (O) in einem Sichtfeld (FOV) reflektierten Lichts erfasst,
**dadurch gekennzeichnet, dass**
die Empfangsoptik (EO), die mehreren erfassten Teilszenen zu einem einzigen Abbildungsbereich (AB) überlagert.

15. Vorrichtung nach Anspruch 14,
**dadurch gekennzeichnet, dass**
die Empfangsoptik den Abbildungsbereich (AB) gleichzeitig auf alle Empfangspixel (P1 - Px) projiziert.

16. Vorrichtung nach zumindest einem der vorstehenden Ansprüche 14 oder 15,
**dadurch gekennzeichnet, dass**
eine Auswerteeinrichtung (AE) vorgesehen ist, die zeitlich nacheinander von der Empfangseinheit (E) empfangene Bilddaten zu einem Gesamtbild (G) mit einer x- und einer y-Richtung zusammensetzt, wobei die Empfangsoptik (EO) so ausgebildet ist, dass das zusammengesetzte Gesamtbild (G) in x- und/oder y-Richtung eine unterschiedliche Auflösung aufweist.

17. Vorrichtung nach Anspruch 16,
**dadurch gekennzeichnet, dass**
die Empfangsoptik (EO) so ausgebildet ist, dass das zusammengesetzte Gesamtbild (G) an seinen beiden Seitenrändern eine erhöhte Auflösung in y-Richtung aufweist.

18. Vorrichtung nach zumindest einem der vorstehenden Ansprüche 14 - 17,
**dadurch gekennzeichnet, dass**
die Empfangsoptik (EO) derart ausgebildet ist, dass zumindest zwei nebeneinander angeordnete Teilbereiche (A, B) einer Teilszene auf den Empfangspixeln (P1 - Px) der Empfangseinheit (E) untereinander und/oder beabstandet angeordnet sind, oder
dass zumindest zwei untereinander angeordnete Teilbereiche (A, B) einer Teilszene (LS1 - LS4) auf den Empfangspixeln (P1 - Px) der Empfangseinheit (E) nebeneinander und/oder beabstandet angeordnet sind.

19. Vorrichtung nach zumindest einem der vorstehenden Ansprüche 14 - 18,
**dadurch gekennzeichnet, dass**
eine Steuerung (C) vorgesehen ist, welche die Sendeelemente (S1 - S4, S1' - S4') in einer vorbestimmten Reihenfolge abwechselnd und nacheinander ansteuert.

20. Vorrichtung nach zumindest einem der vorstehenden Ansprüche 14 - 19,
**dadurch gekennzeichnet, dass**
die Empfangsoptik (EO) eine insbesondere einstückige Facettenlinse umfasst.

21. Vorrichtung nach zumindest einem der vorstehenden Ansprüche 14 - 20,
**dadurch gekennzeichnet, dass**
diese im Strahlengang zwischen dem Sichtfeld (FOV) und der Empfangseinheit (E) keine bewegten Komponenten aufweist.

22. Vorrichtung nach zumindest einem der vorstehenden Ansprüche 14 - 21,
**dadurch gekennzeichnet, dass**
in der Empfangsoptik (EO) oder im Strahlengang zwischen dem Sichtfeld (FOV) und der Empfangsoptik (EO) eine Abdeckeinrichtung vorgesehen ist, mit der zumindest eine Teilszene (LS1 - LS4) des Sichtfelds (FOV) verdeckt wird.

23. Vorrichtung nach zumindest einem der vorstehenden Ansprüche 14 - 21,
**dadurch gekennzeichnet, dass**
in der Empfangsoptik (EO) oder im Strahlengang zwischen dem Sichtfeld (FOV) und der Empfangsoptik (EO) eine Abdeckeinrichtung vorgesehen ist, mit der das reflektierte Licht von nur einer Teilszene (LS1 - LS4) des Sichtfelds (FOV) zu der Empfangseinrichtung (E) durchgelassen wird.

24. Vorrichtung nach Anspruch 22 oder 23,
**dadurch gekennzeichnet, dass**
die Abdeckeinrichtung eine mechanische oder elektronische Blende, insbesondere eine LCD-Blende, umfasst.

25. Vorrichtung nach Anspruch 22, 23 oder 24,
**dadurch gekennzeichnet, dass**
die Abdeckeinrichtung mit einer Steuerung (C) der Sendeelemente zeitlich synchronisiert ist.

## Claims

1. A method for acquiring image data, comprising the following steps:
a) providing a transmission unit (S) comprising a plurality of transmission elements (S1 - S4) arranged in at least one row, a reception unit (E) comprising reception pixels (P1 - Px) arranged in rows and columns, and at least one reception optics (EO) arranged between the transmission unit (S) and the reception unit (E);
b) illuminating a first partial scene (LS1 - LS4) of a field of view (FOV) using a first transmission element (S1 - S4) during a first time window (t1);
c) illuminating a further partial scene (LS1 - LS4) of the field of view (FOV) using another transmission element (S1 - S4) during a further time window (t2); wherein
d) the image data received successively in time by the reception pixels in the time windows are read out and combined to form a total image (G); and
e) no moving parts are used in an optical path between the field of view (FOV) and the reception unit (E),
**characterized in that**
f) light reflected by an object in the respective partial scene (LS1 - LS4) is projected simultaneously onto all the reception pixels (P1 - Px) by the reception optics (EO) during each time window (t1 - t4).

2. A method according to claim 1,
**characterized in that**
the reflected light of all the partial scenes (LS1 - LS4) is superposed and projected onto a single imaging region (AB) by the reception optics (EO) in order to increase the resolution.

3. A method according to claim 1 or 2,
**characterized in that**
at least two part regions (A, B) of a partial scene (LS1 - LS4) arranged next to one another are projected onto the reception pixels (P1 - Px) of the reception unit (E) by the reception optics (EO) such that they are arranged there beneath one another and/or spaced apart.

4. A method according to at least one of the preceding claims,
**characterized in that**
at least two part regions (A, B) of a partial scene (LS1 - LS4) arranged beneath one another are projected onto the reception pixels (P1 - Px) of the reception unit (E) by the reception optics (EO) such that they are arranged there next to one another and/or spaced apart.

5. A method according to at least one of the preceding claims,
**characterized in that**
adjacent part regions (A, B) of a partial scene (LS1 - LS4) are projected onto a different number of reception pixels (P1 - Px) by the reception optics (EO).

6. A method according to at least one of the preceding claims,
**characterized in that**
adjacent partial scenes (LS1 - LS4) are successively illuminated.

7. A method according to at least one of the preceding claims,
**characterized in that**
a facet lens, in particular a single-piece facet lens, is used as the reception optics (EO).

8. A method according to at least one of the preceding claims,
**characterized in that**
the number of illuminated partial scenes (LS1 - LS4) corresponds to the number of transmission elements (S1 - S4).

9. A method according to at least one of the preceding claims 1 to 7,
**characterized in that**
the number of transmission elements (S1 - S4, S1' - S4') is larger and in particular twice as large as the number of illuminated partial scenes (LS1 - LS4).

10. A method according to claim 9,
**characterized in that**
different part regions (TB1, TB2) of a partial scene (LS1) are successively illuminated by a first (S1 - S4) and a second transmission element (S1' - S4') during two consecutive time windows (t1, t1'), with only some of the reception pixels being read out in each time window.

11. A method according to claim 10,
**characterized in that**
a first contiguous region of the reception pixels is read out in a first time window (t1) and another contiguous region of the reception pixels, which is adjacent to the first region, is read out in a subsequent time window (t1').

12. A method according to at least one of the preceding claims,
**characterized in that**
at least one partial scene (LS1 - LS4) of the field of view (FOV) is covered in the reception optics (EO) or in the optical path between the field of view (FOV) and the reception optics (EO).

13. A method according to at least one of the preceding claims,
**characterized in that**,
during each time window (t1 - t4), only the reflected light of a predetermined part region (TB1, TB2) of an illuminated partial scene is directed onto the reception pixels.

14. An apparatus, which is configured to carry out a method according to at least one of the preceding claims, comprising a transmission unit (S) comprising a plurality of transmission elements (S1 - S4; S1' - S4') arranged in at least one row, a reception unit (E) comprising reception pixels (P1 - Px) arranged in rows and columns, and at least one reception optics (EO) which is arranged between the transmission unit (S) and the reception unit (E) and which detects a plurality of partial scenes of the light reflected by an object (O) in a field of view (FOV),
**characterized in that**
the reception optics (EO) superposes the plurality of detected partial scenes to form a single imaging region (AB).

15. An apparatus according to claim 14,
**characterized in that**
the reception optics simultaneously projects the imaging region (AB) onto all the reception pixels (P1 - Px).

16. An apparatus according to at least one of the preceding claims 14 or 15,
**characterized in that**
an evaluation device (AE) is provided that combines image data received successively in time by the reception unit (E) to form a total image (G) having an x direction and a y direction, with the reception optics (EO) being configured such that the assembled total image (G) has a different resolution in the x direction and/or the y direction.

17. An apparatus according to claim 16,
**characterized in that**
the reception optics (EO) is configured such that the assembled total image (G) has an increased resolution in the y direction at its two side margins.

18. An apparatus according to at least one of the preceding claims 14 to 17,
**characterized in that**
the reception optics (EO) is configured such that at least two part regions (A, B) of a partial scene arranged next to one another are arranged beneath one another and/or spaced apart on the reception pixels (P1 - Px) of the reception unit (E), or
**in that** at least two part regions (A, B) of a partial scene (LS1 - LS4) arranged beneath one another are arranged next to one another and/or spaced apart on the reception pixels (P1 - Px) of the reception unit (E).

19. An apparatus according to at least one of the preceding claims 14 to 18,
**characterized in that**
a control (C) is provided that controls the transmission elements (S1 - S4, S1' - S4') in an alternating and successive manner in a predetermined sequence.

20. An apparatus according to at least one of the preceding claims 14 to 19,
**characterized in that**
the reception optics (EO) comprises a facet lens, in particular a single-piece facet lens.

21. An apparatus according to at least one of the preceding claims 14 to 20,
**characterized in that**
it has no moving components in the optical path between the field of view (FOV) and the reception unit (E).

22. An apparatus according to at least one of the preceding claims 14 to 21,
**characterized in that**
a cover device, by which at least one partial scene (LS1 - LS4) of the field of view (FOV) is covered, is provided in the reception optics (EO) or in the optical path between the field of view (FOV) and the reception optics (EO).

23. An apparatus according to at least one of the preceding claims 14 to 21,
**characterized in that**
a cover device, by which the reflected light is transmitted from only one partial scene (LS1 - LS4) of the field of view (FOV) to the reception device (E), is provided in the reception optics (EO) or in the optical path between the field of view (FOV) and the reception optics (EO).

24. An apparatus according to claim 22 or 23,
**characterized in that**
the cover device comprises a mechanical or electronic aperture, in particular an LCD aperture.

25. An apparatus according to claim 22, 23 or 24,
**characterized in that**
the cover device is synchronized in time with a control (C) of the transmission elements.

## Revendications

1. Procédé d'acquisition de données d'image, comprenant les étapes suivantes consistant à :
a) prévoir une unité d'émission (S) ayant plusieurs éléments émetteurs (S1 - S4) disposés en au moins une rangée, une unité de réception (E) ayant des pixels de réception (P1 - Px) disposés en lignes et en colonnes, et au moins une optique de réception (EO) disposée entre l'unité d'émission (S) et l'unité de réception (E) ;
b) illuminer une première scène partielle (LS1 - LS4) d'un champ de vision (FOV) avec un premier élément émetteur (S1 - S4) pendant une première fenêtre temporelle (t1) ;
c) illuminer une autre scène partielle (LS1 - LS4) du champ de vision (FOV) avec un autre élément émetteur (S1 - S4) pendant une autre fenêtre temporelle (t2) ; sachant que
d) les données d'image reçues successivement dans le temps par les pixels de réception dans les fenêtres temporelles sont lues et assemblées en une image globale (G) ; et
e) aucune pièce mobile n'est utilisée dans le chemin optique entre le champ de vision (FOV) et l'unité de réception (E) ;
**caractérisé en ce que**
f) la lumière réfléchie par un objet dans la scène partielle respective (LS1 - LS4) est projetée simultanément sur tous les pixels de réception (P1 - Px) par l'optique de réception (EO) pendant chaque fenêtre temporelle (t1 - t4).

2. Procédé selon la revendication 1,
**caractérisé en ce que**
pour augmenter la résolution, la lumière réfléchie de toutes les scènes partielles (LS1 - LS4) est superposée et projetée sur une seule zone de représentation (AB) par l'optique de réception (EO).

3. Procédé selon la revendication 1 ou 2,
**caractérisé en ce que**
au moins deux zones partielles (A, B) d'une scène partielle (LS1 - LS4), disposées l'une à côté de l'autre, sont projetées sur les pixels de réception (P1 - Px) de l'unité de réception (E) par l'optique de réception (EO) de telle sorte qu'elles y sont disposées l'une en dessous de l'autre et/ou à distance l'une de l'autre.

4. Procédé selon l'une au moins des revendications précédentes,
**caractérisé en ce que**
au moins deux zones partielles (A, B) d'une scène partielle (LS1 - LS4), disposées l'une en dessous de l'autre, sont projetées sur les pixels de réception (P1 - Px) de l'unité de réception (E) par l'optique de réception (EO) de telle sorte qu'elles y sont disposées l'une à côté de l'autre et/ou à distance l'une de l'autre.

5. Procédé selon l'une au moins des revendications précédentes,
**caractérisé en ce que**
des zones partielles voisines (A, B) d'une scène partielle (LS1 - LS4) sont projetées sur un nombre différent de pixels de réception (P1 - Px) par l'optique de réception (EO).

6. Procédé selon l'une au moins des revendications précédentes,
**caractérisé en ce que**
des scènes partielles voisines (LS1 - LS4) sont illuminées l'une après l'autre.

7. Procédé selon l'une au moins des revendications précédentes,
**caractérisé en ce que**
une lentille à facettes, notamment monobloc, est utilisée comme optique de réception (EO).

8. Procédé selon l'une au moins des revendications précédentes,
**caractérisé en ce que**
le nombre de scènes partielles (LS1 - LS4) illuminées correspond au nombre d'éléments émetteurs (S1 - S4).

9. Procédé selon l'une au moins des revendications précédentes 1 à 7,
**caractérisé en ce que**
le nombre d'éléments émetteurs (S1 - S4, S1' - S4') est supérieur, et notamment double, au nombre de scènes partielles (LS1 - LS4) illuminées.

10. Procédé selon la revendication 9,
**caractérisé en ce que**
différentes zones partielles (TB1, TB2) d'une scène partielle (LS1) sont illuminées successivement par un premier (S1 - S4) et un deuxième élément émetteur (S1' - S4') pendant deux fenêtres temporelles successives (t1, t1'), une partie seulement des pixels de réception étant lue dans chaque fenêtre temporelle.

11. Procédé selon la revendication 10,
**caractérisé en ce que**
dans une première fenêtre temporelle (t1), une première zone contiguë des pixels de réception est lue et, dans une fenêtre temporelle suivante (t1'), une autre zone contiguë des pixels de réception est lue, qui est adjacente à la première zone.

12. Procédé selon l'une au moins des revendications précédentes,
**caractérisé en ce que**
dans l'optique de réception (EO) ou dans le chemin optique entre le champ de vision (FOV) et l'optique de réception (EO), au moins une scène partielle (LS1 - LS4) du champ de vision (FOV) est masquée.

13. Procédé selon l'une au moins des revendications précédentes,
**caractérisé en ce que**
pendant chaque fenêtre temporelle (t1 - t4), seule la lumière réfléchie d'une zone partielle prédéterminée (TB1, TB2) d'une scène partielle illuminée est dirigée vers les pixels de réception.

14. Dispositif conçu pour mettre en œuvre un procédé selon l'une au moins des revendications précédentes,
comprenant une unité d'émission (S) ayant plusieurs éléments émetteurs (S1 - S4 ; S1' - S4') disposés en au moins une rangée, une unité de réception (E) ayant des pixels de réception (P1 - Px) disposés en lignes et en colonnes, et au moins une optique de réception (EO) disposée entre l'unité d'émission (S) et l'unité de réception (E), qui détecte plusieurs scènes partielles de la lumière réfléchie par un objet (O) dans un champ de vision (FOV),
**caractérisé en ce que**
l'optique de réception (EO) superpose lesdites plusieurs scènes partielles détectées en une seule zone de représentation (AB).

15. Dispositif selon la revendication 14,
**caractérisé en ce que**
l'optique de réception projette la zone de représentation (AB) simultanément sur tous les pixels de réception (P1 - Px).

16. Dispositif selon l'une au moins des revendications précédentes 14 ou 15,
**caractérisé en ce que**
il est prévu un dispositif d'évaluation (AE) qui assemble des données d'image, reçues successivement dans le temps par l'unité de réception (E), en une image globale (G) ayant une direction x et une direction y, l'optique de réception (EO) étant conçue de telle sorte que l'image globale assemblée (G) présente une résolution différente dans la direction x et/ou y.

17. Dispositif selon la revendication 16,
**caractérisé en ce que**
l'optique de réception (EO) est conçue de telle sorte que l'image globale assemblée (G) présente, au niveau de ses deux bords latéraux, une résolution accrue dans la direction y.

18. Dispositif selon l'une au moins des revendications précédentes 14 à 17,
**caractérisé en ce que**
l'optique de réception (EO) est conçue de telle sorte qu'au moins deux zones partielles (A, B) d'une scène partielle, disposées l'une à côté de l'autre, sont disposées l'une en dessous de l'autre et/ou à distance l'une de l'autre sur les pixels de réception (P1 - Px) de l'unité de réception (E), ou **en ce qu'**au moins deux zones partielles (A, B) d'une scène partielle (LS1 - LS4), disposées l'une en dessous de l'autre, sont disposées l'une à côté de l'autre et/ou à distance l'une de l'autre sur les pixels de réception (P1 - Px) de l'unité de réception (E).

19. Dispositif selon l'une au moins des revendications précédentes 14 à 18,
**caractérisé en ce que**
il est prévu une commande (C) qui commande les éléments émetteurs (S1 - S4, S1' - S4') alternativement et successivement dans un ordre prédéfini.

20. Dispositif selon l'une au moins des revendications précédentes 14 à 19,
**caractérisé en ce que**
l'optique de réception (EO) comprend une lentille à facettes, notamment monobloc.

21. Dispositif selon l'une au moins des revendications précédentes 14 à 20,
**caractérisé en ce que**
il ne comporte pas de composants mobiles dans le chemin optique entre le champ de vision (FOV) et l'unité de réception (E).

22. Dispositif selon l'une au moins des revendications précédentes 14 à 21,
**caractérisé en ce que**
un organe de masquage est prévu dans l'optique de réception (EO) ou dans le chemin optique entre le champ de vision (FOV) et l'optique de réception (EO), organe avec lequel au moins une scène partielle (LS1 - LS4) du champ de vision (FOV) est masquée.

23. Dispositif selon l'une au moins des revendications précédentes 14 à 21,
**caractérisé en ce que**
un organe de masquage est prévu dans l'optique de réception (EO) ou dans le chemin optique entre le champ de vision (FOV) et l'optique de réception (EO), organe avec lequel la lumière réfléchie d'une seule scène partielle (LS1 - LS4) du champ de vision (FOV) est transmise à l'unité de réception (E).

24. Dispositif selon la revendication 22 ou 23,
**caractérisé en ce que**
l'organe de masquage comprend un diaphragme mécanique ou électronique, en particulier un diaphragme LCD.

25. Dispositif selon la revendication 22, 23 ou 24,
**caractérisé en ce que**
l'organe de masquage est synchronisé dans le temps avec une commande (C) des éléments émetteurs.
